# EUROPEAN PATENT APPLICATION

(11) **EP 1 030 466 A1**
(43) Date of publication of application: **23.08.2000**
(21) Application number: 99301196.4
(22) Date of filing: 18.02.1999
(51) Int. Cl.: H04B 7/185

(54) **Communications apparatus and method using different satellites for uplink and downlink**

(71) Applicant: ICO Services Ltd., London W6 9BN (GB)
(72) Inventor: Goerke, Tom, Stanmore, Middlesex HA7 3PN (GB)
(74) Representative: Musker, David Charles

(57) **Abstract**

A method of constructing a satellite communications system providing a bidirectional link between each of a plurality of terminals and an earth station, each said link comprising both a to-terminal and a from-terminal path, the method comprising; launching a first satellite towards a first orbit, said first satellite comprising a from-mobile transponder, comprising a terminal uplink for receiving a signal from said plurality of terminals and an earth station downlink for transitting corresponding signals to said earth station, said first satellite being substantially without means for carrying said to-mobile link, and; launching a second satellite towards a second orbit, said second satellite comprising a to-mobile transponder, comprising a terminal downlink for transmitting a signal to said plurality of terminals and an earth station uplink for receiving corresponding signals from said earth station, said second satellite being substantially without means for carrying said from-mobile link.

## Description

This invention relates to bidirectional satellite communications, and particularly to multipoint satellite communications, such as mobile communications.

Satellite mobile communications systems are well known. In recent years, a number of certain systems have been proposed, including the recently launched Iridium system, and the proposed GlobalStar and ICO systems.

With the exception of the Iridium system, most such satellite communication systems comprise a mobile link for communications with the mobile users, and a feeder link for communications with a fixed Earth station. Typically, the two are at different bands of the radio frequency spectrum. Each satellite therefore comprises a mobile link transponder and a feeder link transponder together making up the communications payload, together with the satellite bus providing power and propulsion. In many such systems, the frequencies for communications to and from the mobile terminals will be somewhat different, requiring separate antennas or antenna components.

In order to achieve high gain on the user link, which is desirable because of the limited transmission power typically available at a mobile communications terminal, and the greater but still limited power available on board the satellite, it is desirable to provide large user link communications antennas. Such antennas may be provided by a large parabolic dish feed from horns or other elements, or from a large directly radiating array.

However, constraints are placed on the size of satellites, and also on their weight, by the capabilities of available launch vehicles. Every satellite launch is extremely expensive, and larger masses and sizes require larger launch vehicles with correspondingly larger volumes of fuel.

Increasing the number of spot beams covering the field of view of the satellite, and decreasing the size (and hence increasing the gain) of each spot beam, is desirable to improve the user link communications. However, this requires an increase in the size of the user link antenna, and the typical maximum dimension of a launch vehicle is on the order of a few metres. Experiments have been made on segmented antennas, which can be unfolded in orbit, but such antennas are inherently harder to align precisely than a unitary antenna, and there are risks of mechanical failures during deployment, which would render the whole satellite useless.

Also, as the number of beams increases, the weight of the antennas increases, and so do the number (and weight) of electrical components, and the heat sinks required to dissipate electrical power.

Other than using larger launch vehicles, various techniques might be used to mitigate this problem. For example, it has been proposed to provide "clusters" of satellites in a geostationary orbit, to replace a single large geostationary satellite (see "European Investigations of concepts and techniques for future communications space segments", Preukschat et al, IAF-82-51, XXXIII Congress of International Astronautical Federation, Paris 1982, and "Satellite Clusters", Visher, Satellite Communications, September 1989, pp 22-27).

Such a cluster comprises a number of separate satellites, co-located in orbit. It may consist of a central satellite with some co-ordination facility, surrounded by satellites performing bidirectional communications with the Earth, to which the central satellite is linked by intersatellite links. The central satellite may, for example, provide telemetry and control for the cluster, or may provide switching capacity.

The present invention proposes to improve the available antenna capacity for a given launch vehicle, by the realisation that the forward (i.e. feeder-to-mobile) and return (i.e. mobile-to-feeder) paths can be separated into different satellites.

Accordingly, the present invention provides for communication with a user terminal (which may be mobile) by one or more satellites transmitting to the mobile terminal from an Earth station, and one or more satellites receiving from the terminal and transmitting to an Earth station. Each such satellite consists of a transmitter in a first band and a receiver in a second band, so as to make it substantially unidirectional. In addition to these payload components, each satellite may also comprise a conventional satellite bus.

Because each such satellite only needs to provide one half of the transponder conventionally provided in a communications satellite, for the same satellite mass a substantially larger communications capacity can be provided in the payload, since a larger antenna and more electrical components can be provided in the half of the transponder within the satellite.

The forward and return link satellites are preferably in the same orbit, but do not need to be exactly co-located, since they can function substantially independently of each other. For the same reason, they need not communicate with each other and so no intersatellite links may be provided. Accordingly, as compared to the station keeping and communications required of, for example, satellite clusters, the unidirectional satellites of the present invention offer a reduction in complexity and the corresponding risk of failure.

Where the communications system of the invention is for telephony, substantially equal numbers of forward link and return link satellites will be provided, typically in pairs close in orbit to each other. However, where the communications satellite provides asymmetrical communications (for example, enabling a user with mobile terminal to access the internet) in which relatively little data is transmitted in one direction compared to the other (for example, user commands are transmitted from the mobile terminal and files or pages of data are transmitted to the mobile terminal) then substantially more satellites of one type (typically, to-mobile satellites) may be provided.

Thus, for example, a constellation providing single global coverage in the from-mobile direction may be accompanied by a satellite constellation providing multiple global coverage in the to-mobile direction.

Other aspects and preferred embodiments of the invention, together with corresponding advantages, will be apparent from the following description, drawings and claims.

Embodiments of the invention will now be illustrated, by way of example only, with reference to the accompanying drawings in which:
Figure 1 shows a conventional bi-directional satellite transponder in a satellite communications system;
Figure 2 is a block diagram illustrating schematically the structure of such a satellite transponder;
Figure 3 corresponds to Figure 1 and shows a pair of unidirectional satellites according to a first embodiment of the invention;
Figure 4a is a block diagram corresponding to Figure 2 and showing the components of a first satellite of Figure 3; and
Figure 4b is a block diagram showing the components of a second satellite of Figure 3.

### Known Mobile Communications Satellite System

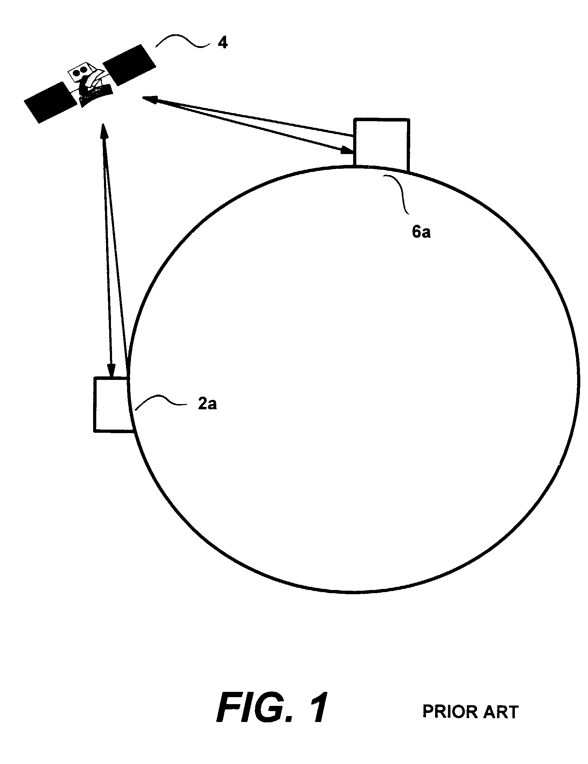

Referring to Figure 1, known satellite mobile communication systems, such as the Inmarsat™ system using satellites in geostationary orbit, or the Iridium™ system using satellites in low Earth orbit, comprise one or more satellites 4a in orbit around the Earth, and having a transponder for communications with a user terminal (UT) such as a mobile terminal 2a, and a transponder for communications with a fixed Earth station 6a. In use, a communications link is established, via the satellite, from the fixed Earth station to the mobile terminal 2 or vice versa.

The fixed Earth station is connected to terrestrial communications networks such as the PSTN (public switched telecommunication network) so that the mobile terminal 2 can communicate with any fixed or mobile terminal through the satellite 4 and fixed Earth station 6. A number of fixed Earth stations 6 may be provided (for example of the order of 12) to provide communications capacity at multiple regions of the Earth.

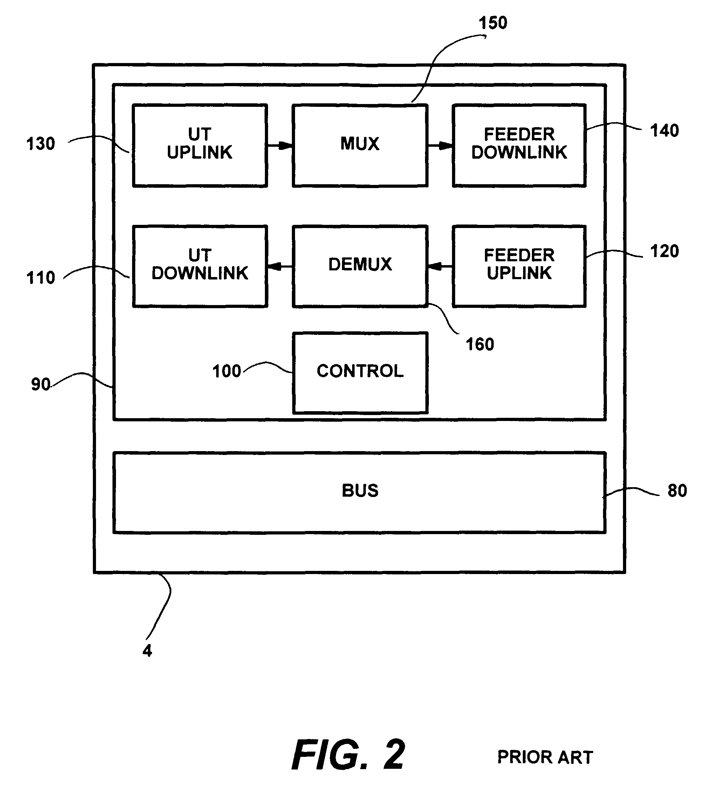

Referring to Figure 2, the satellites 4 comprise a bus module 80 and a payload module 90. The bus module 80 comprises the elements of the satellite which are common to all satellite applications.

Specifically, the bus module 80 comprises a propulsion system comprising thrusters for maintaining the satellite in its assigned orbital position; a power subsystem comprising, for example, a pair of solar cell wings pointed at the sun and a storage battery charged from the solar panel and discharged when the satellite is not in view of the sun; and a thermal control subsystem to dissipate heat.

Also provided are an attitude control subsystem arranged, in this case, to direct the body of the satellite towards the Earth and the solar cells towards the sun as described in our earlier UK application GB 2320232; and a telemetry and command system by which the satellite transmits data concerning its operating conditions and receives commands from a satellite control centre causing it to, for example, adjust its position in orbit.

The bus may be, for example, the HS601 or HS601 high power satellites, or the HS702 satellite, all available from Hughes Space and Communications Company, in California, US.

The payload module 90 comprises a control unit 100; a user terminal downlink module 110 for transmitting signals to user terminals 2, the UT downlink module 110 comprising a UT downlink antenna (e.g. a multibeam direct radiating array antenna), power amplifiers and a beam forming network; a feeder uplink module 120 comprising a parabolic antenna steered towards the fixed Earth station 6, together with a low noise amplifier for amplifying the received signals; a user terminal uplink module 130 for receiving signals from user terminals 2, the UT uplink module 130 comprising a UT uplink antenna (e.g. a multibeam direct radiating array antenna), low noise amplifiers and a beam forming network; and a feeder downlink module 140 comprising a parabolic antenna steered towards the fixed Earth station 6, together with a power amplifier.

Interconnecting the UT uplink module 130 with the feeder downlink module 140 is a multiplexing network 150. The network 150 is arranged to frequency-translate each of the user terminal signals on each UT uplink beam into a predetermined frequency within the feeder downlink spectrum (for example, via an intermediate frequency).

Interconnecting the feeder uplink module 120 with the UT downlink module 110 is a further multiplexing network 160. The network 160 is arranged to frequency-translate each of the user terminal signals on each predetermined frequency within the feeder uplink spectrum into a predetermined frequency on a predetermined UT downlink beam (for example, via an intermediate frequency).

The mappings for the networks 150, 160 are determined by the control unit 100, on the basis of commands received from the TT&C module.

The UT uplink and downlink modules are co-located as a first unit, and the feeder uplink and downlink modules are co-located as a second unit, on the spacecraft.

### First Embodiment

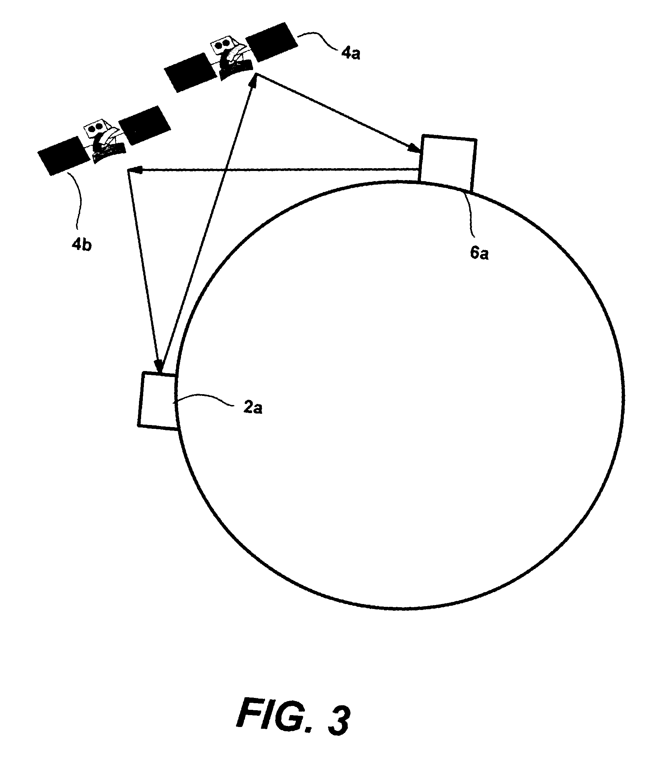

Referring to Figure 3, in a first embodiment of the invention, a pair of satellites 4a, 4b, close together in orbit, replace each satellite 4 of the prior art. Except as otherwise indicated hereafter, other components are as described above.

In this embodiment, a global coverage constellation of satellites is provided, consisting of a pair of orbital planes each inclined at 45 degrees to the equatorial plane, spaced apart by 90 degrees around the equatorial plane, each comprising ten pairs of satellites 4a, 4b, (i.e. a total of 20 operational satellites) the pairs being evenly spaced in orbit, with a phase interval of zero degrees between the planes (i.e. a 10/2/0 constellation in Walker notation) at an altitude of about 10,000 km.

Each UT 2 comprises an omnidirectional antenna, i.e. an antenna having generally satisfactory communications performance at all directions above a certain minimum elevation above the horizon (such as ten degrees) so as not to require pointing or steering to a satellite.

Thus, neglecting blockages, a UT 2 at any position on earth has always a communications path to at least one satellite 4 in orbit ("global coverage").

The Earth stations 6 are positioned dispersed about the Earth such that for any orbital position, at least one Earth station 6 is in view of a satellite 4.

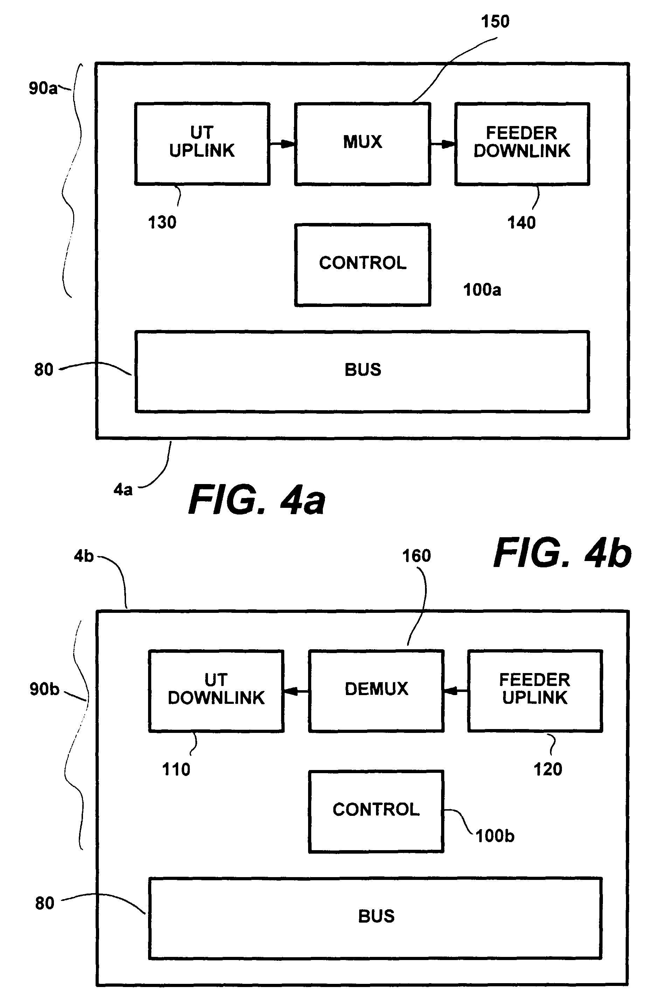

The satellites comprise a first type 4a, providing a UT-to-Earth station link, and a second type 4b providing an Earth station-to-UT link. Referring to Figures 4a and 4b, each satellite comprises the same bus module 80, and a payload 90.

As shown in Figure 4a, the payload 90a of the satellite 4a comprises the components 130-150 of the conventional spacecraft of Figure 2, and a control unit 100a. As shown in Figure 4b, the payload 90b of the satellite 4b comprises the components 110, 120, 160 of the conventional spacecraft of Figure 2, and a control unit 100b. Each payload may have a mass on the order of 1200kg, and the entire satellites may have external dimensions (when undeployed, within the launch vehicle faring) of around 2 to 3 metres.

To construct the space segment of the system, 20 launch vehicles are provided at sites lying between the equator and the inclination angle (i.e. latitude 45 degrees), each carrying one of the satellites, and are each launched directly into the required orbital altitude.

The satellites of the two types 4a and 4b are alternately launched, and after successful injection into orbit, each pair 4a, 4b are manoeuvred into close positions in the same orbital plane (for example, within a degree of arc) by transmitting TT&C commands to the satellites 4 to control their thrusters.

In operation, each pair of satellites 4a, 4b simply function as a direct replacement for a single satellite 4. The UT 2 requires no modification since the two satellites appear to be at the same orbital position and the pair are close enough together that their beam patterns in the UT links cover substantially the same area.

However, each of the satellites may have more capacity (for the same launch vehicle) than in the prior art since it provides only a unidirectional link.

### Second Embodiment

In this embodiment, each of the beams uses, at any instant, a set of frequencies which is determined by the area of the Earth over which it is positioned, as described in WO 96/03814. Thus, the UT 2 does not need to retune to a different frequency when beam-to-beam or satellite-to-satellite handover are performed. Instead, the frequencies used by each beam of each satellite 4 are periodically changed as the beam passes over different areas of the Earth.

Accordingly, in this embodiment, the satellites of each pair 4a, 4b no longer need to be close in orbit, since whatever the positions of the satellites 4a and 4b, the transmit beam of the satellite 4a and receive beams of a satellite 4b covering the same UT 2 will of necessity be using the same frequencies (this being dictated by the terrestrial position of the UT). Since the antennas of the UT are omnidirectional in the same sense as in the first embodiment, the UT can communicate with widely spaced transmit and receive satellites 4a, 4b.

In this embodiment, then, provided global coverage of both types of satellite 4a and 4b is maintained, the two sets no longer need to be strictly paired. The two sets could even be at different altitudes.

Advantageously, however, satellites of one set 4a are interleaved in the constellation of the other set 4b at the same altitude. This enables additional payloads (such as navigation beacons or emergency receivers) to be provided in both sets of satellites, giving double or multiple coverage of those additional payloads.

For example, each of the two sets may be in a 10/2/0 constellation as described above, sharing orbital planes, with the satellites 4b lying equidistantly between those 4a in the same plane.

### Third Embodiment

In the preceding embodiments, equal numbers of satellites are provided in the first set and second set (i.e. for the from-mobile and to-mobile directions). However, in fact, the satellites of one set may be able to accept higher capacity than those of the other. For example, the power required of satellites 4a in the to-mobile direction may be higher, as these need to transmit power across a wide area of the Earth to low gain UTs 2, whereas satellites 4b transmitting in the from-mobile direction are received by higher gain antennas on the Earth stations 6 and hence can use lower power levels.

Accordingly, the latter need smaller solar cell arrays, and smaller batteries (for the same capacity, in which case smaller and cheaper launch vehicles can be used) or can provide more beams and hence a larger capacity (for the same bus, enabling fewer satellites to be used - up to the limit of those geometrically necessary for single global coverage).

Furthermore, whilst equal from-mobile and to-mobile capacity (i.e. symmetrical bidirectional links) is desirable for voice communications, there are other forms of communications in which the traffic is asymmetrical. For example, data access (for browsing the Worldwide Web, or downloading data files using ftp or the like) is typically asymmetrical with small bandwidth required for signalling from the UT 2, and much higher (and ever-growing) bandwidth required in the to-mobile direction.

Thus, a data terminal such as a computer or Personal Digital Assistant connected to the UT 2 can signal requests for pages or files up through a satellite 4b, and download the requested data through a satellite 4b.

The number of satellites 4b in this embodiment is larger than that of satellites 4a, and each has a higher bandwidth per channel (for example by allowing several channels for a single to-mobile communication) and supports fewer simultaneous channels, so that the capacity in the to-mobile direction is greater and the number of channels is the same, as in the from-mobile direction.

If necessary, additional satellites 4b can be added to increase capacity in the to-mobile direction further, allowing more of the capacity of each satellite (e.g. more time or frequency slots) to be allocated to each channel.

Where the capacity is to be increased by a multiple, this is arranged by launching a new set of satellites 4b to be interspersed with those already in orbit, the positions of which can therefore remain unchanged.

Where single satellites are to be added at a time, this is achieved by launching a new satellite into an existing orbital plane, and drifting the remaining satellites round the plane to make them evenly spaced, by controlling the thrusters of the existing satellites as necessary.

Thus, in this embodiment, the decoupling of the from-mobile and to-mobile directions enables the capacity of each direction separately to be satisfied, by providing different numbers of satellites 4a from satellites 4b.

### Other embodiments

It will be clear from the foregoing that the above described embodiment is merely one way of putting the invention into effect. Many other alternatives will be apparent to the skilled person and are within the scope of the present invention.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of constructing a satellite communications system providing a bidirectional link between each of a plurality of terminals and an earth station, each said link comprising both a to-terminal and a from-terminal path, the method comprising;
launching a first satellite towards a first orbit, said first satellite comprising a from-terminal transponder, comprising a terminal uplink for receiving a signal from said plurality of terminals and an earth station downlink for transitting corresponding signals to said earth station, said first satellite being substantially without means for carrying said to-terminal link, and;
launching a second satellite towards a second orbit, said second satellite comprising a to-terminal transponder, comprising a terminal downlink for transmitting a signal to said plurality of terminals and an earth station uplink for receiving corresponding signals from said earth station, said second satellite being substantially without means for carrying said from-terminal link.

2. A method of building the space segment of a satellite communications system providing a bidirectional link between a plurality of terminals and an earth station, said link comprising simultaneous to-terminal and from-terminal paths, the method comprising;
building a plurality of first satellites each comprising a from-terminal transponder, comprising a terminal uplink for receiving a signal from said plurality of terminals and an earth station downlink for transitting corresponding signals to said earth station, said first satellites being substantially without means for carrying said to-terminal link, and;
building a plurality of second satellites each comprising a to-terminal transponder, comprising a terminal downlink for transmitting a signal to said plurality of terminals and an earth station uplink for receiving corresponding signals from said earth station, said second satellites being substantially without means for carrying said from-terminal link.

3. A method of operating a satellite communications system providing a bidirectional link between a plurality of terminals and an earth station, said link comprising simultaneous to-terminal and from-terminal paths, the method comprising;
providing said from-terminal path to each terminal via a first satellite and said to-terminal path via a second, different, satellite.

4. The method of claim 3, in which said first satellites are substantially without means for carrying said to-terminal link, and said second satellites are substantially without means for carrying said from-terminal link.

5. The method of any preceding claim, wherein the capacity of said to-terminal satellites exceeds that of said from-terminal satellites.

6. The method of claim 5, wherein there are more said to-terminal satellites than from-terminal satellites.

7. The method of any preceding claim, in which each said satellite employs a plurality of beams directed to respective, different, coverage areas of the earth.

8. The method of claim 7 in which each beam uses a respective set of frequencies, and in which the frequencies of sets used by neighbouring beams differ to provide frequency re-use.

9. The method according to claim 8, in which said satellites are provided in non-geostationary orbits.

10. The method of claim 9 in which said non-geostationary orbits comprise a global coverage constellation.

11. The method of claim 9 when appended to claim 8 in which the frequencies used by each beam are re-allocated over time as the satellite thereof moves relative to the earth, so that the frequencies used by fixed coverage regions on the earth remain fixed as said satellites move.

12. The method of any preceding claim, in which each said first satellite has at least one associated second satellite located close in orbit thereto.

13. A bidirectional satellite communication system comprising:
at least one earth station (6);
at least one user terminal (2); and
a plurality of satellites (4) in orbit;
characterised in that said plurality of satellites comprise a plurality of first satellites (4a) for receiving signals from said user terminal and relaying said signals to said earth station (6) and;
a plurality of second satellites (4b) for receiving signals from said earth station (6) and relaying said signals to said user terminal (2);
said earth station (6) being arranged to maintain a bidirectional communications link with said user terminal (2) through separate unidirectional paths through said first satellite (4a) and second satellite (4b).

14. A set of satellites for providing the space segment of a bidirectional satellite communications system, comprising:
a first subset of satellites (4a) for providing a unidirectional communications link from said user terminal (2) to said earth station (6), and
a second subset of satellites for providing a link from an earth station (6) to a user terminal (2).

15. A satellite for use in a set according to claim 14, said satellite comprising a bus module and a payload, said payload providing one direction of a bidirectional communications link.
